# EUROPÄISCHE PATENTSCHRIFT

(11) **EP 3 659 239 B1**
(45) Veröffentlichungstag und Bekanntmachung des Hinweises auf die Patenterteilung: **31.01.2024**
(21) Anmeldenummer: 18815654.1
(22) Anmeldetag: 06.12.2018
(51) Int. Cl.: H02K 1/276, H02K 5/24

(54) **ELEKTROMOTOR UND VERFAHREN ZUM MONTIEREN EINES ELEKTROMOTORS**
ELECTRIC MOTOR AND METHOD FOR ASSEMBLING AN ELECTRIC MOTOR
MOTEUR ÉLECTRIQUE ET PROCÉDÉ DE MONTAGE D'UN MOTEUR ÉLECTRIQUE

(30) Priorität: 27.12.2017 DE 102017131353; 23.03.2018 DE 102018106947
(43) Veröffentlichungstag der Anmeldung: 03.06.2020
(73) Patentinhaber: EBM-PAPST ST. GEORGEN GMBH & CO. KG, 78112 St. Georgen (DE)
(72) Erfinder: GRIESSHABER, Niclas, 78112 St. Georgen (DE); HERR, Jürgen, 78112 St. Georgen (DE); SCHULDE, Arnold, 78054 VS-Schwenningen (DE)
(74) Vertreter: Staeger & Sperling Partnerschaftsgesellschaft mbB
(86) Internationale Anmeldenummer: PCT/EP2018/083811
(87) Internationale Veröffentlichungsnummer: WO 2019/129471

(56) Entgegenhaltungen:
- EP-A1- 1 501 170
- EP-A1- 3 073 613
- EP-A1- 3 220 513
- DE-A1- 10 332 958
- DE-A1-102007 058 072
- DE-A1-102015 112 539
- US-A1- 2010 007 236

## Beschreibung

Die vorliegende Erfindung betrifft einen Elektromotor nach dem Oberbegriff des Hauptanspruchs. Ferner betrifft die vorliegende Erfindung ein Verfahren zum Montieren eines derartigen Elektromotors.

Elektromotoren, als Innenläufer- oder Außenläufer-Elektromotor ausgebildet, werden für eine Vielzahl von Anwendungen eingesetzt, wobei insbesondere im Hinblick auf eine Großserienfertigung Qualitäts- und Kostenaspekte eine zunehmend größere Rolle spielen.

So ist es aus dem Stand der Technik bei einem Innenläufer-Elektromotor, also bei vom Stator umschlossenen Rotor, welcher dann als Reaktion auf das Bestromen einer Statorwicklung zum Drehen um eine Drehachse angetrieben wird, allgemein bekannt, den Stator an einer stationären Trägereinheit, üblicherweise einem Motorgehäuse, durch Kleben oder Schrumpfen zu fixieren, um insoweit in einem Befestigungszustand für einen festen Halt der Statorbaugruppe zu sorgen.

Allerdings bedeutet das Verwenden einer Klebemasse für das Fixieren des Stators in einem umschließenden Gehäuse (Trägereinheit) nicht nur zusätzlich benötigtes Material, auch ist ein entsprechender Auftrags- und Fügeprozess notwendig. Dagegen benötigt das Schrumpfen kein gesondertes (Kleber-)Material, allerdings entstehen hier zusätzliche Schwierigkeiten durch die Prozessgestaltung, insbesondere etwaige Maßtoleranzen, das geeignete Vorbereiten der Verbindungspartner und weitere Erfordernisse, welche einen derartigen Ansatz, insbesondere für eine (automatisierbare) Großserienfertigung, weniger geeignet machen.

Bei einer Realisierung gattungsgemäßer Elektromotoren als Außenläufer-Elektromotor ist es dagegen bekannt, den in diesem Fall relativ zu dem außen umlaufenden Rotor innenliegenden Stator auf einem rohrförmigen Träger, üblicherweise einem Lagerrohr oder Trägerrohr, mithilfe einer weiteren Baugruppe zu befestigen, welche zwischen die Verbindungspartner Stator einerseits und Lagerrohr (Trägereinheit) andererseits gesetzt wird und mithilfe von geeigneten Profilierungen (Krallen) die mechanische Verbindung bewirkt. Auch hier ist der zusätzliche Aufwand, sowohl im Hinblick auf die zusätzlich notwendige Baugruppe, als auch den zugehörigen Verbindungsvorgang, prinzipiell aufwendig und verteuert damit einen (automatisierbaren bzw. automatisierten) Großserien-Herstellungsprozess.

Druckschriftlicher Stand der Technik im vorliegenden technischen Gebiet, welcher den Oberbegriff des Anspruchs 1 widerspiegelt, ist in den Dokumenten EP 3 220 513 A1, US 2010/007236 A1, DE 10 2007 058 072 A1, DE 103 32 958 A1, EP 3 073 613 A1 und DE 10 2015 112 539 A1 offenbart.

Aufgabe der vorliegenden Erfindung ist es daher, einen Elektromotor nach dem Hauptanspruch auf vereinfachte Weise mit einer zum Halten bzw. stationären Fixieren des Stators vorgesehenen Trägereinheit zu verbinden, dabei insbesondere zusätzlichen Baugruppen- bzw. Materialaufwand zu minimieren und zusätzlich die Voraussetzungen für eine automatisierbare und qualitätssichere Herstellung zu schaffen.

Die Aufgabe wird durch einen Elektromotor mit den Merkmalen des Hauptanspruchs gelöst; vorteilhafte Weiterbildungen der Erfindung sind in den Unteransprüchen beschrieben. Zusätzlich Schutz im Rahmen der Erfindung wird beansprucht für ein Verfahren zum Montieren des erfindungsgemäßen Elektromotors.

In erfindungsgemäß vorteilhafter Weise sind an einer Stator-Umfangsfläche bügelartige Erhöhungsabschnitte mit dazwischenliegenden Radialvertiefungen ausgebildet, wobei sich in Umfangsrichtung zumindest abschnittsweise entlang der Erhöhungsabschnitte jeweils ein schlitzartiger Stator-Axialdurchbruch erstreckt und die Erhöhungsabschnitte zum Ausbilden einer kraftschlüssigen Verbindung mit einer Umfangsfläche der Trägereinheit zusammenwirken.

Besonders vorteilhaft wirkt die erfindungsgemäße Maßnahme, dass mindestens einer der statorseitig zwischen den Radialvertiefungen sitzenden Erhöhungsabschnitte in der Art eines Bügels mit einem schlitzartigen Durchbruch versehen ist, welcher sich in axialer Richtung parallel zur Drehachse und in Umfangsrichtung mit bügelartigem Querschnittsverlauf über einen vorbestimmten (Dreh-)Winkelabschnitt innerhalb des betreffenden Erhöhungsabschnitts erstreckt. Damit entsteht eine das Befestigen und Halten vereinfachende bügelförmige und elastische Struktur, welche in einem Befestigungszustand des Elektromotors, insbesondere einem Betriebszustand mit zum Antreiben des Rotors bestromter Wicklung, entstehende Vibrationen und mechanische Einflüsse mindert, so dass keine Lockerung der Klemmverbindung entstehen kann. Grundsätzlich kann die Anzahl der Erhöhungsabschnitte mit eingelassenen Stator-Axialdurchbrüchen variieren, um auf diese Weise die Größe der Klemmkraft "einzustellen". Auch kann die Position der Stator-Axialdurchbrüchen in Umfangsrichtung variabel sein, um die Klemmkraft zu beeinflussen.

Nicht-erfindungsgemäß ist der Elektromotor als Innenläufer-Elektromotor mit dem von dem Stator umschlossenen Rotor ausgebildet, wobei die Trägereinheit ein Gehäuse umfasst, das den Stator zumindest abschnittsweise umschließt und an dem der Stator fixiert ist und wobei an der als Stator-Außenumfangsfläche ausgebildeten Stator-Umfangsfläche die Erhöhungsabschnitte radial nach außen gerichtet sind und im Zusammenwirken mit der als Gehäuse-Innenumfangsfläche ausgebildeten Umfangsfläche der Trägereinheit die als eine Klemmverbindung ausgeführte kraftschlüssige Verbindung herstellen.

In der Variante als nicht-erfindungsgemäßer Innenläufer-Elektromotor wirkt somit die Stator-Außenumfangsfläche mit der Gehäuse-Innenumfangsfläche zusammen. Dazu sind an der Stator-Außenumfangsfläche die Erhöhungsabschnitte radial nach außen gerichtet und stellen mit der Gehäuse-Innenumfangsfläche, die einen konstanten Radius aufweist, eine Klemmverbindung her. Die Erhöhungsabschnitte bilden also in Verbindung mit den schlitzartigen Stator-Axialdurchbrüchen einen elastisch deformierbaren Klemmabschnitt, der die kraftschlüssige Verbindung bewirkt.

Erfindungsgemäß ist der Elektromotor als Außenläufer-Elektromotor mit dem den Stator umschließenden Rotor ausgebildet, wobei die Trägereinheit ein Trägerrohr umfasst, das von dem Stator umschlossen ist und an dem der Stator fixiert ist, und wobei an der als Stator-Innenumfangsfläche ausgebildeten Stator-Umfangsfläche die Erhöhungsabschnitte radial nach innen gerichtet sind und im Zusammenwirken mit der als Trägerrohr-Außenumfangsfläche ausgebildeten Umfangsfläche der Trägereinheit die als eine Klemmverbindung ausgeführte kraftschlüssige Verbindung herstellen.

In der Variante als Außenläufer-Elektromotor wirkt somit die Stator-Innenumfangsfläche mit der Trägerrohr-Außenumfangsfläche konstanten Durchmessers zusammen. Dabei bilden die Erhöhungsabschnitte in Verbindung mit den bügelartig ausgeformten Stator-Axialdurchbrüchen elastisch deformierbare Klemmabschnitte, um die erfindungsgemäße kraftschlüssige Verbindung zu bewirken.

In erfindungsgemäßer Ausgestaltung weist zum Ausbilden einer Dreh-Klemm-Verbindung die Trägereinheit radial von der Umfangsfläche der Trägereinheit vorspringende und entlang dieser Umfangsfläche verteilt angeordnete Vorsprungsabschnitte mit dazwischenliegenden Vertiefungsabschnitten auf, wobei die Vorsprungsabschnitte in einem Montagezustand zwischen der Trägereinheit und dem Stator fluchtend, spielbehaftet und zum Erlauben eines axialen Aufsteckens des Stators den abschnittsweisen Radialvertiefungen an der Stator-Umfangsfläche gegenüberstehen können, und in einem den Stator an oder in der Trägereinheit drehstarr haltenden Befestigungszustand, bevorzugt Betriebsbereitschaftszustand des Elektromotors, bei gegenüber dem Montagezustand um die Drehachse verdrehter Relativposition zwischen dem Stator und der Trägereinheit, eine Klemmwirkung zwischen der Umfangsfläche der Trägereinheit und der Stator-Umfangsfläche bewirken.

Diese erfindungsgemäß ausgebildeten Vorsprungsabschnitte, welche bei einem nicht-erfindungsgemäßen Innenläufer-Elektromotor von der Trägereinheit radial nach innen, dagegen bei einem Außenläufer-Elektromotor radial nach außen weisen, sind dabei so ausgebildet, dass sie in einem Montagezustand (als relativer Positionierung zwischen der Trägereinheit und dem Stator vor der Herstellung einer kraftschlüssigen Verbindung zwischen diesen) spielbehaftet und zum Erlauben eines axialen Einsteckens den Radialvertiefungen an der Stator-Umfangsfläche gegenüberstehen. Diese Radialvertiefungen sind dabei so ausgestaltet, dass, im Rahmen der erfindungsgemäßen Dreh-Klemm-Verbindung, zunächst Stator und Trägereinheit in der axialen Richtung (also in der Richtung der Drehachse des Rotors oder parallel zu dieser) ineinander gesteckt werden können.

Die (trägerseiten) Vorsprungsabschnitte mit dazwischenliegenden Vertiefungsabschnitten sowie die (statorseitigen) Erhöhungsabschnitte mit dazwischenliegenden Radialvertiefungen weisen ein solches Profil auf, dass in einem aus dem Montagezustand durch Verdrehen um die Drehachse hergestellten Befestigungszustand (vergleichbar etwa mit dem Drehen eines Bajonetts im Rahmen einer Bajonettverbindung) ein drehstarrer Verbindungszustand durch Klemmen zwischen Stator und Trägereinheit hergestellt ist. Die erfindungsgemäße kraftschlüssige Verbindung wird vorteilhaft dadurch erreicht, dass durch eine geeignete entlang des Umfangs rampenartige Ausgestaltung mit radialer Änderung der einerseits an der Trägereinheit ausgebildeten Vorsprungsabschnitte mit dazwischenliegenden Vertiefungsabschnitten und andererseits der in der Stator-Umfangsfläche ausgebildeten Erhöhungsabschnitten mit dazwischenliegenden Radialvertiefungen nicht nur das Verdrehen um einen vorbestimmten (und durch eine derartige Dimensionierung bestimmten) Drehwinkel ermöglicht ist, auch lässt sich eine feste Klemmwirkung ab einem bestimmten Drehwinkel erzeugen.

Eine nicht-erfindungsgemäße Ausführung des Elektromotors als Innenläufer-Elektromotor weist mindestens drei Vorsprungsabschnitte auf, die an der Gehäuse-Innenumfangsfläche in gleichmäßigen Abständen radial nach innen gerichtet verteilt angeordnet sind und im Befestigungszustand bevorzugt mit einer gleichzahligen Anzahl der nach außen gerichteten Erhöhungsabschnitte des Stators klemmend zusammenwirken.

Weiterhin bevorzugt sind bei einer Ausführung des Elektromotors als Außenläufer-Elektromotor die Vorsprungsabschnitte an der Trägerrohr-Außenumfangsfläche radial nach außen gerichtet und wirken im Befestigungszustand bevorzugt mit den nach innen gerichteten Erhöhungsabschnitten des Stators klemmend zusammen.

Sowohl die Ausführung des Elektromotors als nicht-erfindungsgemäßer Innenläufer-Elektromotor, bei dem die Gehäuse-Innenumfangsfläche mit der Stator-Außenumfangsfläche zusammenwirkt, als auch bei der Ausführung des Elektromotors als Außenläufer-Elektromotor, bei dem die Trägerrohr-Außenumfangsfläche mit der Stator-Innenumfangsfläche zusammenwirkt, ist eine einfache Einführung des Stators in das Gehäuse bzw. auf das Trägerrohr problemlos möglich.

Bevorzugt ist es ferner, den erfindungsgemäßen Stator gemäß einer Weiterbildung der Erfindung als Schichtanordnung einer Mehrzahl von Einzelblechen auszugestalten; bei dieser Variante ist es im Hinblick auf die Herstellung weiter vereinfacht, die statorseitigen Radialvertiefungen samt dazwischenliegenden Erhöhungsabschnitten mit den schlitzartigen Stator-Axialdurchbrüchen auf einfache und kostengünstige Weise herzustellen, nämlich durch einfaches Stanzen der Einzelbleche, welche dann beim Zusammenfügen automatisch die gewünschte Statorprofilierung auf der Stator-Umfangsfläche erzeugen.

Besonders bevorzugt ist eine Auswahl aus der Mehrzahl der die Schichtanordnung ausbildenden Blechelementen mit Erhöhungsabschnitten und schlitzartigen Stator-Axialdurchbrüchen versehen.

Indem nur eine gewisse Auswahl von Blechelementen mit Erhöhungsabschnitten und schlitzartigen Stator-Axialdurchbrüchen versehen ist, kann ebenfalls die Größe der Klemmkraft bestimmt werden.

Weiterhin kann mit Vorteil durch Pressfügen eine kraftschlüssige Verbindung hergestellt werden. Dabei werden die zu verbindenden Teile, der Stator sowie die Trägereinheit, so hergestellt, dass nach dem Fügen an den Verbindungsstellen eine Presspassung entsteht. Der Fügevorgang kann dabei durch thermische Prozesse unterstützt werden, in dem beispielsweise das Trägerrohr zunächst gekühlt wird.

Entsprechend ist es im Rahmen des erfindungsgemäßen Herstellungsverfahrens dann vorgesehen, für das Verbinden des Stators an den Trägermitteln zunächst, im erfindungsgemäßen Montagezustand, Trägermittel und Stator ineinander zu stecken, indem, geeignet fluchend ausgerichtet, die trägermittelseitigen Vorsprungsabschnitte - spielbehaftet - auf die statorseitigen Radialvertiefungen weisen. Bei dem darauffolgenden Verdrehen zwischen Stator und Trägermitteln erfolgt das Verklemmen und damit das gewünschte Fixieren, ohne dass, erfindungsgemäß vorteilhaft, zusätzliche Baugruppen, Klebstoffe oder dergleichen Mittel verwendet werden müssen.

Bei geeigneter Profilierung bzw. Ausgestaltung von Trägermitteln und Stator gestattet zudem die vorliegende Erfindung eine sehr weitgehende automatisierbare Fertigung, sodass im Rahmen der Erfindung signifikante Kostenvorteile, insbesondere für eine geplante Großserienfertigung bei erfindungsgemäßen Elektromotoren, realisiert werden können.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: im Querschnitt einen nicht-erfindungsgemäßen Innenläufer-Elektromotor mit einem mittels Klemmverbindung an einem Gehäuse fixierten Stator;
- Fig. 2: ausschnittsweise im Querschnitt die durch bügelartige, auswärts gerichtete Erhöhungsabschnitte des Stators bewirkte Klemmverbindung aus Fig. 1;
- Fig. 3: im Querschnitt einen nicht-erfindungsgemäßen Innenläufer-Elektromotor mit einem mittels Dreh-Klemmverbindung an einem Gehäuse fixierten Stator im Befestigungszustand;
- Fig. 4: ausschnittsweise im Querschnitt der nach Verdrehen des Stators durch bügelartige, auswärts gerichtete Erhöhungsabschnitte des Stators und Vorsprungsabschnitte des Gehäuses bewirkte Dreh-Klemmverbindung aus Fig. 3;
- Fig. 5: im Querschnitt einen erfindungsgemäßen Außenläufer-Elektromotor mit einem mittels Klemmverbindung an einem Trägerrohr fixierten Stator;
- Fig. 6: ausschnittsweise im Querschnitt die durch bügelartige, inwärts gerichtete Erhöhungsabschnitte des Stators bewirkte Klemmverbindung aus Fig. 5;
- Fig. 7:: im Querschnitt einen erfindungsgemäßen Außenläufer-Elektromotor mit einem mittels Dreh-Klemmverbindung an einem Trägerrohr fixierten Stator; und
- Fig. 8:: ausschnittsweise im Querschnitt die durch bügelartige, inwärts gerichtete Erhöhungsabschnitte des Stators und Vorsprungsabschnitte des Trägerrohrs bewirkte Dreh-Klemmverbindung aus Fig. 7.

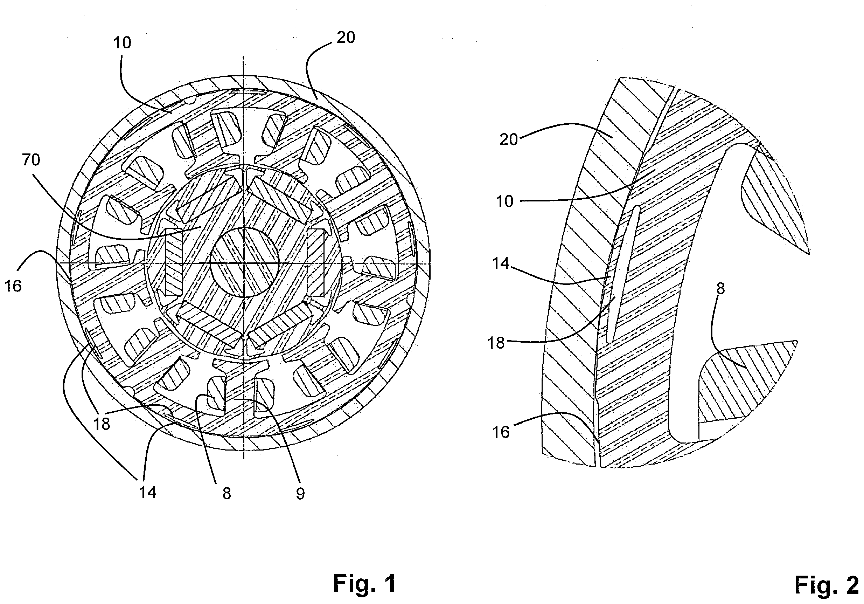

Die Fig. 1 zeigt einen nicht-erfindungsgemäßen Innenläufer-Elektromotor mit einem Stator 10, einer als Gehäuse ausgeführten Trägereinheit 20 und einem innenliegenden Rotor 70. Der Stator 10 ist von dem Gehäuse 20 umschlossen und an diesem fixiert. An dem Stator 10 sind nach innen weisende Polschuhe 9 angeformt, die bestrombare Wicklungen 8 tragen und ein Drehfeld erzeugen, welches den innenliegenden Rotor 70 antreibt. Zur Befestigung und Halterung des Stators 10 an dem ihn umgebenden Gehäuse 20 weist der Stator 70 Radialvertiefungen 16 mit dazwischenliegenden Erhöhungsabschnitte 14 auf, die radial nach außen gerichtet sind und im Zusammenwirken mit der als Gehäuse-Innenumfangsfläche ausgebildeten Umfangsfläche der Trägereinheit 20 eine Klemmverbindung herstellen Abschnittsweise entlang der Erhöhungsabschnitte 14 sind schlitzartige Stator-Axialdurchbrüche 18 eingelassen, um bei einem axialen Einführen des Stators 10 in das ihn umgebenden Gehäuse 20 die erfindungsgemäße kraftschlüssige Verbindung zu erzielen.

Die Fig. 2 zeigt in einem vergrößerten Ausschnitt aus Fig. 1, dass ein elastisch deformierbarer Klemmabschnitt aus dem Erhöhungsabschnitt 14 in Verbindung mit dem Stator-Axialdurchbruch 18 gebildet wird. Deutlich zu erkennen ist, dass im Bereich des Erhöhungsabschnittes 14 die Stator-Außenumfangsfläche mit der Gehäuse-Innenumfangsfläche zusammenwirkt, um die gewünschte Klemmwirkung zu erzielen.

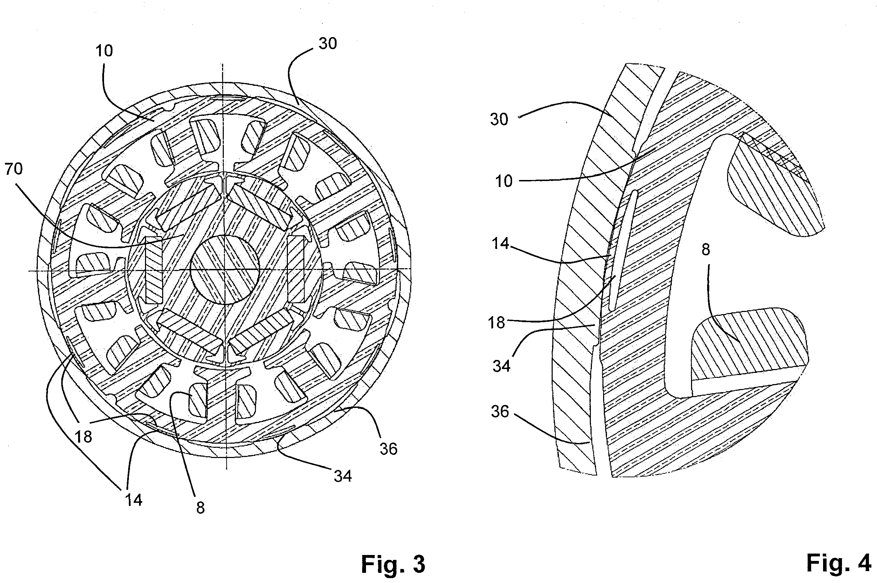

In Fig. 3 ist im Querschnitt ein nicht-erfindungsgemäßer Innenläufer-Elektromotor zu sehen, bei dem mittels Dreh-Klemmverbindung an einem Gehäuse der Trägereinheit 30 der Stator 10 befestigt ist. In Erweiterung der Ausgestaltung für eine reine Klemmverbindung nach Fig. 1 weist die als Gehäuse ausgeführte Trägereinheit 30 hier zusätzlich an der Gehäuse-Innenumfangsfläche in gleichmäßigen Abständen radial nach innen gerichtet und verteilt angeordnete Vorsprungsabschnitte 34 auf. Im Befestigungszustand wirken diese Vorsprungsabschnitte 34 mit einer gleichzahligen Anzahl der nach außen gerichteten Erhöhungsabschnitte 14 des Stators 10 klemmend zusammen. Zwischen den Vorsprungsabschnitten 34 weist die Gehäuse-Innenumfangsfläche Vertiefungsabschnitte 36 auf, die ein kraftfreies Einführen des Stators 10 in die Trägereinheit 30 ermöglichen. Nach dem axialen Einführen des Stators 10 in die Trägereinheit 30 erfolgt durch Verdrehen des Stators 10 die gewünschte Klemmwirkung, in dem die Erhöhungsabschnitte 14 des Stators mit den Vorsprungsabschnitten 34 der Trägereinheit 30 in klemmende Wechselwirkung treten.

Fig. 4 zeigt in einem Ausschnitt aus Fig. 3, wie die nach Verdrehen des Stators 10 aus dem Montagezustand in den Befestigungszustand erzielte kraftschlüssige Verbindung im Bereich der Erhöhungsabschnitte 14 zustande kommt.

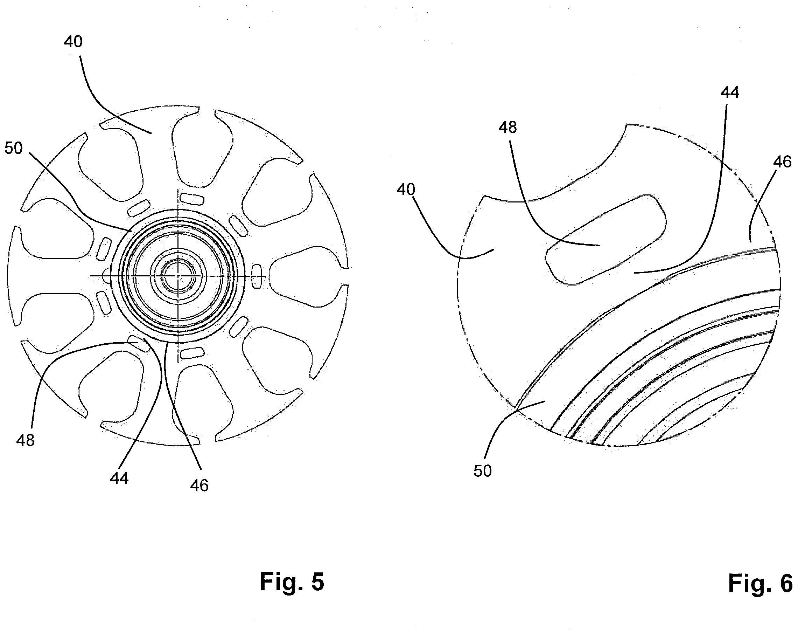

Fig. 5 zeigt im Querschnitt einen erfindungsgemäßen Außenläufer-Elektromotor mit einem mittels Klemmwirkung an einer als Trägerrohr ausgeführten Trägereinheit 50 fixierten Stator 40. An der Stator-Innenumfangsfläche sind Radialvertiefungen 46 mit dazwischenliegenden Erhöhungsabschnitte 44 (siehe Ausschnittsvergrößerung in Fig. 6) ausgebildet, die radial nach innen gerichtet sind und im Zusammenwirken mit der Trägerrohr-Außenumfangsfläche die gewünschte kraftschlüssige Verbindung zu der Trägereinheit 50 herstellen.

Fig. 6 zeigt in einer Ausschnittsvergrößerung der Fig. 5, dass im Bereich der Erhöhungsabschnitte 44 Stator-Axialdurchbrüche 48 vorgesehen sind, um einen elastisch deformierbaren Klemmabschnitt zu erzeugen.

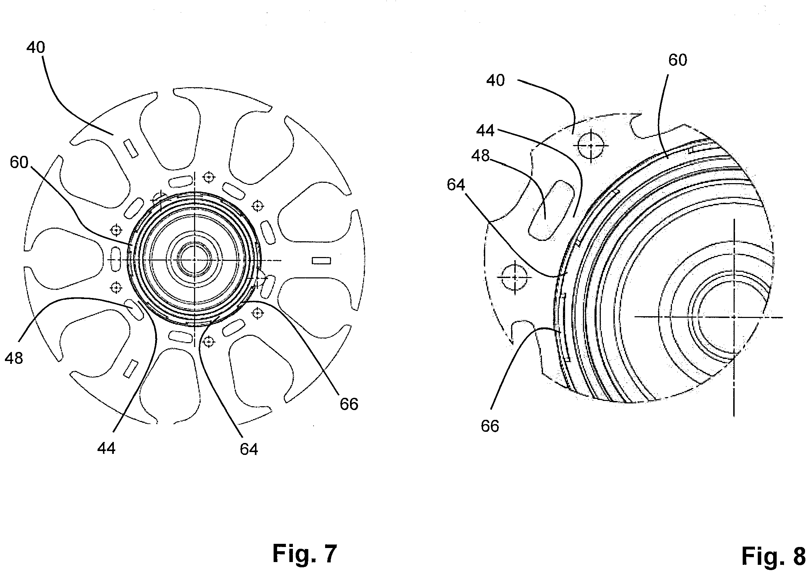

In Erweiterung der reinen Klemmwirkung für einen Außenläufer-Elektromotor nach Fig. 5 ist in Fig. 7 im Querschnitt ein erfindungsgemäßer Außenläufer-Elektromotor dargestellt, bei dem mittels Dreh-Klemmverbindung an einer als Trägerrohr ausgeführten Trägereinheit 60 der Stator 40 fixiert ist. Gegenüber dem in den Fig. 5 und 6 dargestellten Trägerrohr 50 mit einem konstanten Durchmesser weist das Trägerrohr 60 hier Vorsprungsabschnitte 64 auf, die an der Trägerrohr-Außenumfangsfläche radial nach außen gerichtet sind und im Befestigungszustand mit den nach innen gerichteten Erhöhungsabschnitten 44 des Stators 40 klemmend zusammenwirken.

In einer vergrößerten Darstellung eines Ausschnitts aus der Fig. 7 geht in Fig. 8 hervor, dass hier an der Innenumfangsfläche des Stators 40 ein elastisch deformierbarer Klemmabschnitt durch die Erhöhungsabschnitte 44 und die Stator-Axialdurchbrüche 48 gebildet wird.

Nach dem axialen Aufstecken des Stators 40 auf das Trägerrohr 60, bei dem die Erhöhungsabschnitte 44 des Stators 40 den Vertiefungsabschnitten des Trägerrohrs 60 gegenüberstehen, erfolgt nach Verdrehen des Stators 40 die kraftschlüssige Verbindung, indem nunmehr die Erhöhungsabschnitte 44 mit den Vorsprungsabschnitten 64 des Trägerrohrs 60 die Klemmwirkung entfalten.

### Bezugszeichen

- 8: Wicklung
- 9: Polschuhe
- 10: Stator/Innenläufer
- 14: Erhöhungsabschnitte/Innenläufer
- 16: Radialvertiefungen/Innenläufer
- 18: Stator-Axialdurchbruch/Innenläufer
- 20: Trägereinheit/Innenläufer-Gehäuse für Klemmverbindung
- 30: Trägereinheit/ Innenläufer-Gehäuse für Dreh-Klemmverbindung
- 34: Vorsprungsabschnitte/Innenläufer
- 36: Vertiefungsabschnitte/Innenläufer
- 40: Stator/Außenläufer
- 44: Erhöhungsabschnitte/Außenläufer
- 46: Radialvertiefungen/Außenläufer
- 48: Stator-Axialdurchbruch/Außenläufer
- 50: Trägereinheit/Außenläufer-Trägerrohr für Klemmverbindung
- 60: Trägereinheit/Außenläufer-Trägerrohr für Dreh-Klemmverbindung
- 64: Vorsprungsabschnitte/Außenläufer
- 66: Vertiefungsabschnitte/Außenläufer
- 70: Rotor/Innenläufer

## Patentansprüche

1. Elektromotor
mit einem zum Tragen einer bestrombaren Wicklung ausgebildeten Stator (10, 40),
mit einem relativ zu dem Stator in einer Umfangsrichtung um eine Drehachse drehbar gelagerten Rotor (70),
und mit einer stationären Trägereinheit (20, 30, 50, 60) zum Befestigen und Halten des Stators,
wobei an einer Stator-Umfangsfläche bügelartige Erhöhungsabschnitte (14, 44) mit dazwischenliegenden Radialvertiefungen (16, 46) ausgebildet sind und sich in Umfangsrichtung zumindest abschnittsweise entlang der Erhöhungsabschnitte jeweils ein schlitzartiger Stator-Axialdurchbruch (18, 48) erstreckt, wobei die Erhöhungsabschnitte zum Ausbilden einer kraftschlüssigen Verbindung mit einer Umfangsfläche der Trägereinheit zusammenwirken,
wobei der Elektromotor als Außenläufer-Elektromotor mit dem den Stator (40) umschließenden Rotor ausgebildet ist und die Trägereinheit (50) ein Trägerrohr umfasst, das von dem Stator umschlossen ist und an dem der Stator fixiert ist, wobei an der als Stator-Innenumfangsfläche ausgebildeten Stator-Umfangsfläche die Erhöhungsabschnitte (44) radial nach innen gerichtet sind und im Zusammenwirken mit der als Trägerrohr-Außenumfangsfläche ausgebildeten Umfangsfläche der Trägereinheit die als eine Klemmverbindung ausgeführte kraftschlüssige Verbindung herstellen,
wobei zum Ausbilden einer Dreh-Klemm-Verbindung die Trägereinheit (30, 60) radial von der Umfangsfläche der Trägereinheit vorspringende und entlang dieser Umfangsfläche verteilt angeordnete Vorsprungsabschnitte (34, 64) mit dazwischenliegenden Vertiefungsabschnitten (36, 66) aufweist,
wobei die Vorsprungsabschnitte in einem Montagezustand zwischen der Trägereinheit und dem Stator (10, 40) fluchtend, spielbehaftet und zum Erlauben eines axialen Aufsteckens des Stators (10, 40) den abschnittsweisen Radialvertiefungen (16, 46) an der Stator-Umfangsfläche gegenüberstehen können,
und in einem den Stator an oder in der Trägereinheit drehstarr haltenden Befestigungszustand, bevorzugt Betriebsbereitschaftszustand des Elektromotors, bei gegenüber dem Montagezustand um die Drehachse verdrehter Relativposition zwischen dem Stator und der Trägereinheit, eine Klemmwirkung zwischen der Umfangsfläche der Trägereinheit und der Stator-Umfangsfläche bewirken.

2. Vorrichtung nach Anspruch 1,
**dadurch gekennzeichnet,**
**dass** die Vorsprungsabschnitte (64) an der Trägerrohr-Außenumfangsfläche radial nach außen gerichtet sind und im Befestigungszustand bevorzugt mit den nach innen gerichteten Erhöhungsabschnitten (44) des Stators (40) klemmend zusammenwirken.

3. Vorrichtung nach einem der Ansprüche 1 oder 2,
**dadurch gekennzeichnet,**
**dass** der Stator (10, 40) als sich axial erstreckende Schichtanordnung einer Mehrzahl von Blechelementen ausgebildet ist, die entlang einer auf die Trägereinheit (20, 30, 50, 60) gerichteten Umfangsfläche eine die Radialvertiefungen (16, 46) mit den dazwischenliegenden Erhöhungsabschnitten (14, 44) und den schlitzartigen Stator-Axialdurchbrüchen realisierende Profilierung aufweist.

4. Vorrichtung nach Anspruch 3,
**dadurch gekennzeichnet,**
**dass** eine Auswahl aus der Mehrzahl der die Schichtanordnung ausbildenden Blechelementen mit Erhöhungsabschnitten (14, 44) und schlitzartigen Stator-Axialdurchbrüchen (18, 48) versehen ist.

5. Vorrichtung nach Anspruch 1,
**dadurch gekennzeichnet,**
**dass** der Stator (10, 40) und die Trägereinheit (20, 30, 50, 60) mittels Presspassung zusammengefügt sind.

6. Verfahren zum Montieren des Elektromotors nach einem der Ansprüche 1 bis 5, umfassend die Verfahrensschritte:
- Stecken der Trägereinheit (30, 60) und des Stators (10, 40) ineinander so, dass die Vorsprungsabschnitte (34, 64) der Trägereinheit auf die dazu fluchtend ausgerichteten Radialvertiefungen (16, 46) des Stators weisen, und,
- nachfolgendes Verdrehen des Stators relativ zu der Trägereinheit um die Drehachse zum Herstellen der Klemmwirkung zwischen der Umfangsfläche der Trägereinheit und der Stator-Umfangsfläche.

## Claims

1. An electric motor with a stator (10, 40) which is designed to carry an energizable winding,
with a rotor (70) which is mounted so as to be rotatable relative to the stator in a circumferential direction about an axis of rotation,
and with a stationary support unit (20, 30, 50, 60) for fastening and holding the stator,
wherein bow-like raised portions (14, 44) with interposed radial recesses (16, 46) are formed on a stator circumferential surface and a slot-like stator axial opening (18, 48) extends in the circumferential direction at least partially along the raised portions, wherein the raised portions are used to form a frictional connection with a circumferential surface of the carrier unit,
wherein the electric motor is embodied as an electric external rotor motor with the rotor surrounding the stator (40) and the carrier unit (50) comprising a carrier tube which is enclosed by the stator and to which the stator is fixed, wherein, on the stator circumferential surface, which is embodied as the inner circumferential surface of the stator, the raised portions (44) are aligned radially inward and, in cooperation with the circumferential surface of the carrier unit, which is embodied as the outer circumferential surface of the carrier tube, produce the frictional connection in the form of a clamp connection,
wherein, in order to form a rotary-clamp connection, the carrier unit (30, 60) has projecting portions (34, 64) which project radially from the circumferential surface of the carrier unit and are arranged so as to be distributed along this circumferential surface with recessed portions (36, 66) arranged therebetween,
wherein, in an assembled state, the projecting portions are flush between the carrier unit and the stator (10, 40), have a clearance, and can be situated opposite the portion-wise radial recesses (16, 46) on the stator circumferential surface in order to enable the stator (10, 40) to be plugged on axially, and, in a fastening state, preferably the operational readiness state of the electric motor, in which the stator is held on or in the carrier unit in a rotationally rigid manner and in which the relative position between the stator and the carrier unit is rotated about the axis of rotation compared to the assembled state, produce a clamping effect between the circumferential surface of the carrier unit and the stator circumferential surface.

2. The device as set forth in claim 1, **characterized in that** the projecting portions (64) on the carrier tube outer circumferential surface are oriented radially outward and, in the fastened state, preferably cooperate in a clamping manner with the inwardly oriented raised portions (44) of the stator (40).

3. The device as set forth in any one of claims 1 or 2, **characterized in that** the stator (10, 40) is embodied as an axially extending layer arrangement of a plurality of sheet metal elements which has a profile along a circumferential surface that is oriented toward the carrier unit (20, 30, 50, 60) and is created by the radial recesses (16, 46) with the interposed raised portions (14, 44) and the slot-like stator axial openings.

4. The device as set forth in claim 3, **characterized in that** a selection from among the plurality of sheet metal elements forming the layer arrangement is provided with raised portions (14, 44) and slot-like stator axial openings (18, 48).

5. The device as set forth in claim 1, **characterized in that** the stator (10, 40) and the carrier unit (20, 30, 50, 60) are joined together by means of a press fit.

6. A method for assembling the electric motor as set forth in any of claims 1 to 5, comprising the method steps:
- inserting the carrier unit (30, 60) and the stator (10, 40) into one another so that the projecting portions (34, 64) of the carrier unit point toward the radial recesses (16, 46) of the stator which are aligned therewith, and
- subsequent rotation of the stator relative to the carrier unit about the axis of rotation in order to produce the clamping effect between the circumferential surface of the carrier unit and the stator circumferential surface.

## Revendications

1. Moteur électrique, comprenant
un stator (10, 40) réalisé pour porter un enroulement pouvant être alimenté en courant,
un rotor (70) monté rotatif autour d'un axe de rotation par rapport au stator dans une direction circonférentielle,
et une unité porteuse stationnaire (20, 30, 50, 60) pour fixer et maintenir le stator,
dans lequel des parties surélevées (14, 14) en forme d'étrier avec des creux radiaux intermédiaires (16, 46) sont réalisées sur une surface circonférentielle de stator, et respectivement un passage axial de stator (18, 48) en forme de fente s'étend au moins par endroits le long des parties surélevées dans la direction circonférentielle, dans lequel les parties surélevées coopèrent pour réaliser une liaison par adhérence avec une surface circonférentielle de l'unité porteuse,
dans lequel le moteur électrique est réalisé sous la forme d'un moteur à induit extérieur avec le rotor entourant le stator (40), et l'unité porteuse (50) comprend un tube porteur qui est entouré par le stator et est fixé au stator, dans lequel, sur la surface circonférentielle de stator réalisée en tant que surface circonférentielle intérieure de stator, les parties surélevées (44) sont dirigées radialement vers l'intérieur et établissent en coopération avec la surface circonférentielle, réalisée en tant de surface circonférentielle extérieure de tube porteur de l'unité porteuse, la liaison par adhérence réalisée sous forme de liaison par serrage,
dans lequel, pour réaliser une liaison par rotation et serrage, l'unité porteuse (30, 60) présente des parties en saillie (34, 36) faisant saillie radialement à partir de la surface circonférentielle de l'unité porteuse et étant réparties le long de cette surface circonférentielle avec des parties en creux intermédiaires (36, 66),
dans lequel, dans un état de montage, les parties en saillie peuvent être opposées aux creux radiaux intermittents (16, 46) sur la surface circonférentielle de stator entre l'unité porteuse et le stator (10, 40) en alignement, avec du jeu et pour permettre un emboîtement axial du stator (10, 40), et dans un état de fixation maintenant le stator de manière verrouillée en rotation sur ou dans l'unité porteuse, de préférence un état de veille du moteur électrique, dans une position relative entre le stator et l'unité porteuse, pivotée autour de l'axe de rotation par rapport à l'état de montage, provoquent un effet de serrage entre la surface circonférentielle de l'unité porteuse et la surface circonférentielle de stator.

2. Dispositif selon la revendication 1, **caractérisé en ce que** les parties en saillie (64) sur la surface circonférentielle extérieure de tube porteur sont dirigées radialement vers l'extérieur, et à l'état de fixation coopèrent de préférence par serrage avec les parties surélevées (44) du stator dirigées vers l'intérieur.

3. Dispositif selon l'une quelconque des revendications 1 ou 2, **caractérisé en ce que** le stator (10, 40) est réalisé sous la forme d'un agencement de couches s'étendant axialement d'une pluralité d'éléments en tôle qui présente le long d'une surface circonférentielle dirigée vers l'unité porteuse (20, 30, 50, 60) un profilage réalisant les creux radiaux (16, 46) avec les parties surélevées intermédiaires (14, 44) et les passages axiaux de stator en forme de fente.

4. Dispositif selon la revendication 3, **caractérisé en ce qu'**une sélection parmi la pluralité des éléments en tôle réalisant l'agencement de couches est munie de parties surélevées (14, 44) et de passages axiaux de stator (18, 48) en forme de fente.

5. Dispositif selon la revendication 1, **caractérisé en ce que** le stator (10, 40) et l'unité porteuse (20, 30, 50, 60) sont assemblés par ajustage serré.

6. Procédé de montage du moteur électrique selon l'une quelconque des revendications 1 à 5, comprenant les étapes de procédé consistant à :
- emboîter l'unité porteuse (30, 60) et le stator (10, 40) l'une dans l'autre de telle sorte que les parties en saillie (34, 64) de l'unité porteuse sont dirigées vers les creux radiaux (16, 46) du stator orientés en alignement avec celles-ci, et
- ensuite faire pivoter le stator par rapport à l'unité porteuse autour de l'axe de rotation pour établir l'effet de serrage entre la surface circonférentielle de l'unité porteuse et la surface circonférentielle de stator.
